# EUROPÄISCHE PATENTSCHRIFT

(11) **EP 3 821 314 B1**
(45) Veröffentlichungstag und Bekanntmachung des Hinweises auf die Patenterteilung: **08.03.2023**
(21) Anmeldenummer: 19733729.8
(22) Anmeldetag: 24.06.2019
(51) Int. Cl.: G05D 1/02, H04L 12/28

(54) **VERFAHREN UND VORRICHTUNG ZUR ERMITTLUNG VON METADATEN FÜR SMART-HOME KOMPONENTEN**
METHOD AND DEVICE FOR DETECTING METADATA FOR SMART HOME COMPONENTS
PROCÉDÉ ET DISPOSITIF DE DÉTERMINATION DE MÉTADONNÉES RELATIVES À DES COMPOSANTS D'HABITAT INTELLIGENT

(30) Priorität: 12.07.2018 DE 102018211591
(43) Veröffentlichungstag der Anmeldung: 19.05.2021
(73) Patentinhaber: BSH Hausgeräte GmbH, 81739 München (DE)
(72) Erfinder: SÖLLNER, Christoph, 81475 München (DE)
(86) Internationale Anmeldenummer: PCT/EP2019/066632
(87) Internationale Veröffentlichungsnummer: WO 2020/011519

(56) Entgegenhaltungen:
- DE-A1-102016 124 894

## Beschreibung

Die Erfindung betrifft ein Verfahren und eine Vorrichtung zur automatischen Ermittlung von Metadaten für Smart Home Komponenten.

In einem Haushalt werden vermehrt Smart-Home Komponenten verwendet, die z.B. über eine drahtlose Kommunikationsverbindung gesteuert und/oder programmiert werden können. Beispielhafte Smart-Home Komponenten sind Lampen, Hausgeräte, Rollläden, Thermostate für ein Klimatisierungsgerät, Fernsehgeräte, etc. Bei Inbetriebnahme einer Smart-Home Komponente muss die Smart-Home Komponente typischerweise von einem Nutzer manuell eingerichtet werden, um eine Fernsteuerung und/oder eine zentrale Steuerung durch eine Steuereinheit eines Haushalts zu ermöglichen. Bei der manuellen Einrichtung müssen insbesondere Metadaten bzw. Metainformation, wie etwa der Raum, das Stockwerk und/oder die Position, angegeben werden, in dem oder an der sich eine Smart-Home Komponente befindet. Die Metadaten können dann von einer Fernsteuerung und/oder einer zentralen Steuerung dazu verwendet werden, eine Smart-Home Komponente in Abhängigkeit von einer Ortbedingung zu steuern. Beispielsweise können unter Berücksichtigung der Metadaten von Smart-Home Komponenten in einem Haushalt in effizienter und zuverlässiger Weise alle Smart-Home Komponenten in einem bestimmten Raum aktiviert oder deaktiviert werden.

Das manuelle Erfassen von Metadaten für Smart-Home Komponenten ist mit einem relativ hohen zeitlichen Aufwand verbunden und fehleranfällig. Dokument DE 10 2016 124894 A1 offenbart ein Verfahren zur Ermittlung von Metadaten für steuerbare Komponenten in einem Gebäude mit einer Mehrzahl von unterschiedlichen Räumen, wobei das Verfahren umfasst:
- Veranlassen, dass eine mobile Sensoreinheit in einen ersten Raum bewegt wird,
- Bewirken einer messbaren Zustandsänderung der steuerbaren Komponente sowie
-

Erfassen der Sensordaten mittels der mobilen Sensoreinheit im ersten Raum des Gebäudes.

In diesem Dokument sendet die steuerbare Komponente den Raum, in dem sie sich befindet, an die mobile Sensoreinheit. Das vorliegende Dokument befasst sich mit der technischen Aufgabe, die Zuverlässigkeit und die Effizienz bei dem Erfassen von Metadaten für Smart-Home Komponenten zu erhöhen.

Die Aufgabe wird jeweils durch den Gegenstand der unabhängigen Patentansprüche gelöst. Vorteilhafte Ausführungsformen sind insbesondere in den abhängigen Patentansprüchen definiert, in nachfolgender Beschreibung beschrieben oder in der beigefügten Zeichnung dargestellt.

Gemäß einem Aspekt der Erfindung wird ein Verfahren zur Ermittlung von Metadaten für eine steuerbare Komponente in einem Gebäude mit einer Mehrzahl von unterschiedlichen Räumen beschrieben. Bei dem Verfahren kann es sich um ein Computer-implementiertes Verfahren handeln. Insbesondere kann das Verfahren durch eine Steuereinheit bzw. durch einen Server ausgeführt werden. Die steuerbare Komponente kann eine Smart-Home Komponente und/oder ein Hausgerät umfassen. Das Gebäude kann eine Wohnung und/oder ein Haus umfassen. Typischerweise sind in einem Gebäude mehrere steuerbare Komponenten (z.B. 5, 10, 20 oder mehr Komponenten) angeordnet. Beispielhafte steuerbare Komponenten sind: eine Lampe, elektrisch steuerbare Rollläden bzw. Jalousien, eine Klimatisierungseinrichtung, eine Alarmanlage, ein Haushaltsgerät, wie z.B. eine Waschmaschine, eine Spülmaschine, ein Ofen, ein Kühlschrank, ein Trockner, etc.

Das Verfahren umfasst das Bewirken einer messbaren Zustandsänderung der steuerbaren Komponente. Dabei kann es sich insbesondere um eine optisch messbare Zustandsänderung handeln, wie das An- oder Ausschalten einer Lampe oder das Herunterfahren eines Rollladens. Des Weiteren umfasst das Verfahren das Erfassen von Sensordaten in einem ersten Raum des Gebäudes. Insbesondere können optische Sensordaten erfasst werden, bspw. mittels einer Kamera oder mittels eines einfachen Hell-Dunkel-Sensors. Dabei sind das Bewirken einer messbaren Zustandsänderung der Komponente und das Erfassen von Sensordaten bevorzugt zeitlich synchronisiert. Durch eine zeitliche Synchronisation kann bewirkt werden, dass aus einer auf Basis der Sensordaten detektierten Zustandsänderung geschlossen werden kann, dass die detektierte Zustandsänderung auf die messbare Zustandsänderung der steuerbaren Komponente zurückzuführen ist.

Die Zustandsänderung kann derart sein, dass die Zustandsänderung auf Basis der erfassten Sensordaten detektiert werden kann. Die Zustandsänderung einer steuerbaren Komponente kann z.B. umfassen: eine Änderung von einem Grundzustand zu einem geänderten Zustand; eine Änderung von einem inaktiven Zustand in einen aktiven Zustand, oder umgekehrt; eine Änderung der Intensität, mit der die Komponente betrieben wird; eine Änderung von einem geöffneten Zustand in einen geschlossenen Zustand, oder umgekehrt; und/oder eine Ausgabe eines definierten Testmusters durch die Komponente. Zur Erfassung der Sensordaten kann ein Umfeldsensor verwendet werden, der eingerichtet ist, eine derartige Zustandsänderung zu detektieren.

Die Sensordaten können umfassen: Sensordaten zumindest eines optischen Sensors, insbesondere zumindest einer Bildkamera; Sensordaten zumindest eines akustischen Sensors; Sensordaten zumindest eines Ultraschallsensors; Sensordaten zumindest eines Klimasensors, insbesondere eines Temperatursensors und/oder eines Luftfeuchtigkeitssensors; und/oder Sensordaten zumindest eines Inertialsensors (z.B. einer Inertial Measurement Unit, IMU). Die Zustandsänderung der steuerbaren Komponente kann derart sein, dass die Zustandsänderung auf Basis zumindest eines der o.g. Typen von Sensordaten detektiert werden kann.

Die steuerbare Komponente kann z.B. eingerichtet sein, Licht zu emittieren. In diesem Fall kann die Zustandsänderung eine Änderung einer Eigenschaft, insbesondere der Intensität und/oder der Farbe, des emittierten Lichts umfassen. Alternativ oder ergänzend kann die steuerbare Komponente eingerichtet sein, ein Fenster eines Raumes zu bedecken. In diesem Fall kann die Zustandsänderung eine Änderung des Abdeckungsgrades des Fensters umfassen. Alternativ oder ergänzend kann die steuerbare Komponente eingerichtet sein, ein Audio- und/oder Videosignal auszugeben. In diesem Fall kann die Zustandsänderung die Ausgabe eines vordefinierten Audiound/oder Videosignals umfassen.

Außerdem umfasst das Verfahren das Bestimmen auf Basis der Sensordaten, ob sich die steuerbare Komponente in dem ersten Raum befindet oder nicht.

Erfindungsgemäß wird überprüft, ob die Zustandsänderung der steuerbaren Komponente auf Basis der Sensordaten detektiert werden kann. Wenn dies der Fall ist, so kann davon ausgegangen werden, dass sich die steuerbare Komponente in dem ersten Raum befindet. Anderseits kann davon ausgegangen werden, dass sich die steuerbare Komponente in einem anderen Raum des Gebäudes befindet.

Wie bereits oben dargelegt kann die Zustandsänderung derart sein, dass die Zustandsänderung mit den ein oder mehreren Sensoren einer Sensoreinheit erfasst werden kann. Des Weiteren kann im Rahmen des Verfahrens überprüft werden, ob in einem Raum des Gebäudes ein oder mehrere positive Umfeldbedingungen vorliegen, die es ermöglichen, die Zustandsänderung mittels der ein oder mehreren Sensoren der Sensoreinheit zu erfassen, oder ob in einem Raum des Gebäudes ein oder mehrere negative Umfeldbedingungen vorliegen, die der Erfassung der Zustandsänderung durch die ein oder mehreren Sensoren der Sensoreinheit entgegenstehen. Beispielsweise kann detektiert werden, dass ein Raum nicht beleuchtet ist, und daher ein Erfassen und Auswerten von Bilddaten zur Ermittlung von Metadaten nicht oder nur erschwert möglich ist. Wenn erkannt wird, dass ein oder mehrere negative Umfeldbedingungen vorliegen, so kann das beschriebene Verfahren ggf. unterbrochen werden (z.B. bis erkannt wird, dass die ein oder mehreren negativen Umfeldbedingungen nicht mehr vorliegen).

Die Erfindung umfasst das Speichern von Metadaten für die steuerbare Komponente, die anzeigen, dass sich die steuerbare Komponente in dem ersten Raum befindet, wenn auf Basis der Sensordaten bestimmt wurde, dass sich die steuerbare Komponente in dem ersten Raum befindet.

Das o.g. Verfahren kann in unterschiedlichen Räumen des Gebäudes wiederholt werden, bis eindeutig bestimmt werden kann, in welchem Raum sich die steuerbare Komponente befindet. Das Verfahren umfasst erfindungsgemäß das Erfassen von Sensordaten in mehreren unterschiedlichen Räumen der Mehrzahl von Räumen, insbesondere nach-undnach in sequentieller Weise in unterschiedlichen Räumen, wenn bestimmt wurde, dass sich die steuerbare Komponente nicht in dem ersten Raum befindet. Es kann dann auf Basis der Sensordaten aus den unterschiedlichen Räumen bestimmt werden, in welchen Raum der Mehrzahl von Räumen des Gebäudes sich die steuerbare Komponente befindet. Dabei kann die Suche nach dem Raum, in dem sich die steuerbare Komponente befindet, nur solange fortgesetzt werden, bis der Raum gefunden wurde.

Das Verfahren ermöglicht es somit in automatischer und zuverlässiger Weise Metadaten für eine steuerbare Komponente in einem Gebäude zu ermitteln. Die Metadaten können dann dazu genutzt werden, die steuerbare Komponente in komfortabler und effizienter Weise zu betreiben.

Erfindungsgemäß werden die Sensordaten mittels einer mobilen Sensoreinheit erfasst.

Dabei ist die mobile Sensoreinheit in einem bevorzugten Beispiel ein Reinigungsroboter, der eingerichtet ist, den Boden eines Raumes des Gebäudes zu reinigen. Die mobile Sensoreinheit kann veranlasst werden, sich in den ersten Raum zu bewegen, um Sensordaten in dem ersten Raum zu erfassen und um auf Basis der Sensordaten zu überprüfen, ob sich die steuerbare Komponente in dem ersten Raum befindet. Durch die Verwendung einer mobilen Sensoreinheit, insbesondere eines Reinigungsroboters, können Metadaten in besonders effizienter Weise ermittelt werden. Viele Reinigungsroboter besitzen eh eine Kamera. In einer Ausführungsform werden während eines Reinigungsvorgangs des Reinigungsroboters verschiedene optisch messbare Zustandsänderungen von steuerbaren Komponenten bewirkt und es wird ermittelt, ob die Kamera des Reinigungsroboters diese Zustandsänderung erfassen kann. Wenn ja, befindet sich die betreffende Komponente offensichtlich in dem Raum, in dem sich gerade der Reinigungsroboter aufhält. Wenn nein, kann geschlossen werden, dass sich die betreffende Komponente nicht in dem Raum befindet, in dem sich gerade der Reinigungsroboter aufhält. Auf diese Weise können die Orte der steuerbaren Komponenten mit einer Karte des Reinigungsroboters korreliert werden. Dadurch kann ein manuelles Konfigurieren eines Smart-Home-Systems erleichtert werden oder sogar ganz entfallen.

In dem Gebäude sind typischerweise mehrere unterschiedliche steuerbare Komponenten angeordnet. Das Verfahren kann dann umfassen, das iterative Wiederholen für die unterschiedlichen steuerbaren Komponenten, des Bewirkens einer Zustandsänderung der jeweiligen Komponente, des Erfassens von Sensordaten, und des Bestimmens, ob sich die jeweilige Komponente in dem ersten Raum befindet. Durch das Wiederholen der o.g. Verfahrensschritte kann ermittelt werden, welche null, ein oder mehreren Komponenten der unterschiedlichen Komponenten sich in dem ersten Raum befinden. Dieser Prozess kann (zumindest für die noch nicht zugewiesenen Komponenten) in den anderen Räumen des Gebäudes wiederholt werden. So kann in effizienter und zuverlässiger Weise für jede Komponente ermittelt werden, in welchem Raum sich die Komponente befindet.

Das Verfahren kann insbesondere umfassen, das Erfassen von Sensordaten in allen Räumen des Gebäudes, die in einer Raum-Liste aufgelistet sind. Außerdem kann das Verfahren umfassen, das Bewirken von Zustandsänderungen von allen Komponenten, die in einer Komponenten-Liste aufgeführt sind. Es kann dann auf Basis der Sensordaten eine Zuordnung von allen Komponenten der Komponenten-Liste zu jeweils genau einem Raum der Raum-Liste ermittelt werden, und als Metadaten abgespeichert werden.

Im Rahmen des Verfahrens können Sensordaten in unterschiedlichen Teilbereichen des ersten Raumes erfasst werden. Es kann dann auf Basis der Sensordaten bestimmt werden, in welchem Teilbereich des ersten Raumes sich die Komponente befindet. Des Weiteren können Metadaten für die steuerbare Komponente gespeichert werden, die anzeigen, in welchem Teilbereich des ersten Raumes sich die Komponente befindet.

Alternativ oder ergänzend können im Rahmen des Verfahrens Sensordaten in Bezug auf eine Funktionseigenschaft der Komponente erfasst werden (z.B. kann ermittelt werden, welche ein oder mehreren Lichtfarben eine Lampe emittieren kann). Es können dann Metadaten für die steuerbare Komponente gespeichert werden, die anzeigen, welche Funktionseigenschaft die Komponente aufweist. Somit können die Güte und der Detaillierungsgrad von Metadaten in effizienter Weise erhöht werden.

Gemäß einem weiteren Aspekt wird eine Steuereinheit zur Ermittlung von Metadaten für eine steuerbare Komponente in einem Gebäude mit einer Mehrzahl von unterschiedlichen Räumen beschrieben. Die Steuereinheit kann z.B. eine Gebäude-spezifische Steuereinheit für das Gebäude sein. Alternativ oder ergänzend kann die Steuereinheit eine zentrale Steuereinheit für eine Vielzahl von Gebäuden sein.

Erfindungsgemäss ist die Steuereinheit dazu eingerichtet, die steuerbare Komponente zu veranlassen, eine messbare Zustandsänderung, insbesondere eine optisch messbare Zustandsänderung, zu bewirken. Außerdem kann die Steuereinheit eingerichtet sein, eine Sensoreinheit, insbesondere eine mobile Sensoreinheit, zu veranlassen, Sensordaten in einem ersten Raum des Gebäudes zu erfassen. Dabei können insbesondere optische Sensordaten erfasst werden. Erfindungsgemäß ist die Steuereinheit dazu eingerichtet, auf Basis der Sensordaten zu bestimmen, ob sich die steuerbare Komponente in dem ersten Raum befindet oder nicht. Des Weiteren ist die Steuereinheit erfindungsgemäß dazu eingerichtet, Metadaten für die steuerbare Komponente zu speichern, die anzeigen, dass sich die steuerbare Komponente in dem ersten Raum befindet, wenn auf Basis der Sensordaten bestimmt wurde, dass sich die steuerbare Komponente in dem ersten Raum befindet.

Gemäß einem weiteren Aspekt wird eine Sensoreinheit, insbesondere eine mobile Sensoreinheit, etwa ein Reinigungsroboter, beschrieben. Die Sensoreinheit umfasst zumindest eine Antriebseinheit, die eingerichtet ist, die Sensoreinheit zu bewegen.

Außerdem umfasst die Sensoreinheit zumindest einen Umfeldsensor, der eingerichtet ist, Sensordaten in Bezug auf ein Umfeld der Sensoreinheit zu erfassen. Dabei kann es sich beispielsweise um eine Kamera oder einen Helligkeitssensor handeln.

Des Weiteren umfasst die Sensoreinheit ein Steuermodul. Das Steuermodul ist eingerichtet, die Antriebseinheit zu veranlassen, die Sensoreinheit in einen ersten Raum einer Mehrzahl von Räumen eines Gebäudes zu bewegen. Außerdem ist das Steuermodul eingerichtet, ein Steuersignal von einer externen Steuereinheit zu empfangen. Das Steuersignal kann anzeigen, dass eine von dem Umfeldsensor erfassbare Zustandsänderung einer innerhalb des Gebäudes angeordneten steuerbaren Komponente bewirkt wird. Alternativ oder ergänzend kann das Steuersignal anzeigen, dass durch die Sensoreinheit Sensordaten erfasst werden sollen.

Außerdem ist das Steuermodul eingerichtet, in Reaktion auf den Empfang des Steuersignals, den Umfeldsensor zu veranlassen, Sensordaten in dem ersten Raum des Gebäudes zu erfassen. Des Weiteren ist das Steuermodul eingerichtet, zu veranlassen, dass die Sensordaten oder davon abgeleitete Daten an die externe Steuereinheit übertragen werden. Durch das Senden der Sensordaten und/oder der davon abgeleiteten Daten kann es der externen Steuereinheit ermöglicht werden, zu bestimmen, ob sich die steuerbare Komponente in dem ersten Raum befindet oder nicht.

Es ist zu beachten, dass jegliche Aspekte des in diesem Dokument beschriebenen Verfahren und der in diesem Dokument beschriebenen Vorrichtung in vielfältiger Weise miteinander kombiniert werden können. Insbesondere können die Merkmale der Patentansprüche in vielfältiger Weise miteinander kombiniert werden.

Im Weiteren wird die Erfindung anhand von in der beigefügten Zeichnung dargestellten Ausführungsbeispielen näher beschrieben. Dabei zeigen
Figur 1a einen beispielhaften Reinigungsroboter in einer perspektivischen Ansicht;
Figur 1b beispielhafte Komponenten eines Reinigungsroboters;
Figur 2 eine beispielhafte Raumaufteilung eines Gebäudes;
Figur 3 ein beispielhaftes System zur Ermittlung von Metadaten; und
Figur 4 ein Ablaufdiagramm eines beispielhaften Verfahrens zur Ermittlung von Metadaten.

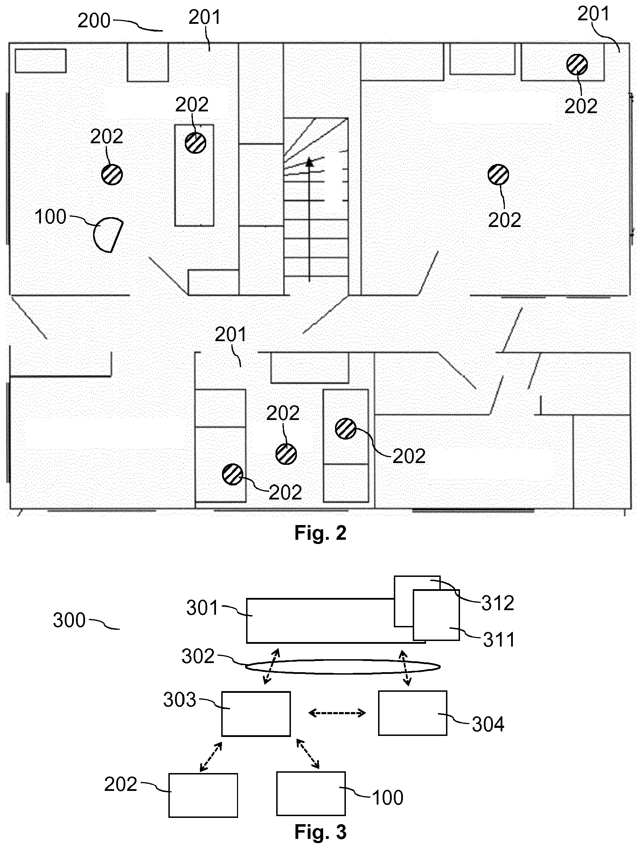

Wie eingangs dargelegt, befasst sich das vorliegende Dokument mit der effizienten und zuverlässigen Ermittlung von Metadaten für Smart-Home Komponenten in einem Haushalt. In diesem Zusammenhang zeigt Fig. 2 ein beispielhaftes Gebäude 200, etwa eine Wohnung, ein Stockwerk eines Hauses oder ein Büro. Das Gebäude 200 ist in mehrere unterschiedliche Räume 201 unterteilt, etwa ein Wohnzimmer, ein Esszimmer, eine Küche, ein Bad, ein Schlafzimmer, etc. In den unterschiedlichen Räumen 201 können jeweils null, ein oder mehrere Smart-Home Komponenten 202 angeordnet sein. Beispielsweise können in den unterschiedlichen Räumen 201 unterschiedliche Thermostate zur Einstellung des Klimas in dem jeweiligen Raume 201 angeordnet sein. Des Weiteren können in den unterschiedlichen Räumen 201 jeweils ein oder mehrere steuerbare Leuchten bzw. Lampen zur Beleuchtung des jeweiligen Raums angeordnet sein. Ferner können z.B. in einer Küche Haushaltsgeräte, etwa eine Spülmaschine, ein Ofen, ein Kühlschrank, ein oder mehrere Küchengeräte, etc. angeordnet sein. In einem Bad können z.B. eine Waschmaschine und/oder ein Wäschetrockner angeordnet sein. In einem Wohnzimmer können z.B. ein Audiowiedergabegerät und/oder ein Fernseher angeordnet sein. In einem Eingangsbereich des Gebäudes 200 kann z.B. die Steuerung für eine Alarmanlage angeordnet sein.

Folglich kann ein Gebäude 200 zahlreiche Smart-Home Komponenten 202 an unterschiedlichen Stellen, insbesondere in unterschiedlichen Räumen 201, des Gebäudes 200 aufweisen. Um eine effiziente Steuerung der unterschiedlichen Smart-Home Komponenten 202 zu ermöglichen, ist es typischerweise vorteilhaft, Metadaten für die unterschiedlichen Smart-Home Komponenten 202 zu hinterlegen. Beispielhafte Metadaten sind,
- Positionsinformation in Bezug auf eine Position, insbesondere in Bezug auf einen Raum 201, an der bzw. in dem sich die Komponenten 202 befindet; und/oder
- Funktionsinformation in Bezug auf eine Funktion, die von der Komponente 202 bereitgestellt werden kann.

Die Metadaten einer steuerbaren (Smart-Home) Komponente 202 in einem Gebäude 200 können beispielsweise manuell durch einen Nutzer hinterlegt werden. Fig. 3 zeigt ein beispielhaftes System 300 zur Ermittlung und/oder zur Verwaltung von Metadaten für die steuerbaren Komponenten 202 in einem Gebäude 200. Für das Gebäude 200 kann eine Gebäude-spezifische Steuereinheit 303 bereitgestellt werden (z.B. eine Smart-Home Steuerzentrale). Alternativ oder ergänzend kann eine zentrale Steuereinheit 301 (etwa in einem Backend-Server) bereitgestellt werden. Die zentrale Steuereinheit 301 kann eingerichtet sein, über ein Kommunikationsnetzwerk 302 (z.B. über das Internet) mit der Gebäude-spezifischen Steuereinheit 303 zu kommunizieren, um Daten auszutauschen. Ferner kann das System 300 ein Steuergerät 304 (z.B. ein Smartphone eines Nutzers) umfassen, das eingerichtet ist, mit der Gebäude-spezifischen Steuereinheit 303 und/oder mit der zentralen Steuereinheit 301 Daten auszutauschen. Dabei kann das Steuergerät 304 ggf. (z.B. mittels einer Software-Applikation) eine Benutzerschnittstelle für einen Nutzer bereitstellen.

Von der zentralen Steuereinheit 301 und/oder von der Gebäude-spezifischen Steuereinheit 303 kann eine Komponenten-Liste 311 der unterschiedlichen steuerbaren Komponenten 202 in einem Gebäude 200 verwaltet und gespeichert werden. Die Komponenten-Liste 311 kann dabei z.B. über das Steuergerät 304 editiert werden. Beispielsweise kann von einem Nutzer ein Datensatz in der Komponenten-Liste 311 für eine neue Komponente 202 angelegt werden. Dabei kann der Datensatz einer Komponente 202 Metadaten in Bezug auf die Komponente 202 aufweisen bzw. anzeigen, wobei die Metadaten ggf. manuell über das Steuergerät 304 von einem Nutzer eingepflegt werden können.

Das manuelle Einpflegen von Metadaten ist zeitaufwändig und fehleranfällig. Das System 300 kann eine Sensoreinheit 100 umfassen, die eingerichtet ist, Sensordaten in Bezug auf eine steuerbare Komponente 202 zu erfassen. Die Sensoreinheit 100 kann z.B. in einem bestimmten Raum 201 eines Gebäudes 200 platziert werden. Ferner kann die Sensoreinheit 100 eingerichtet sein, Sensordaten in Bezug auf diesen Raum 201 zu erfassen. Beispielhafte Sensordaten sind,
- Sensordaten eines optischen Sensors, z.B. einer Bildkamera; und/oder
- Sensordaten eines akustischen Sensors, z.B. eines Mikrofons; und/oder
- Sensordaten eines Temperatursensors; und/oder
- Sensordaten eines Abstandssensors (z.B. eines Time-of-Flight Sensors).

Zur automatischen Ermittlung von Metadaten kann eine Komponente 202 der Komponenten-Liste 311 veranlasst werden, eine, für die Sensoreinheit 100 messbare, Zustandsänderung der Komponente 202 zu bewirken. Beispielsweise kann die Komponente 202 veranlasst werden, ein optisches und/oder akustischen Signal zu bewirken. Es kann dann auf Basis der Sensordaten der Sensoreinheit 100 ermittelt werden, ob die Zustandsänderung der Komponente 202 detektiert werden konnte oder nicht. Wenn die Zustandsänderung detektiert werden konnte, so kann daraus geschlossen werden, dass sich die Komponente 202 in dem gleichen Raum 201 befindet wie die Sensoreinheit 100. Andererseits, wenn keine Zustandsänderung detektiert werden konnte, so kann daraus geschlossen werden, dass sich die Komponente 202 nicht in dem gleichen Raum 201 wie die Sensoreinheit 100 befindet.

Es kann somit in automatischer Weise durch das Bewirken von Zustandsänderungen durch die unterschiedlichen steuerbaren Komponenten 202 in einem Gebäude 200 sowie durch das Platzieren einer Sensoreinheit 100 in unterschiedlichen Räumen 201 des Gebäudes 200 eine Eins-zu-Eins Zuordnung der Komponenten 202 zu den Räumen 201 des Gebäudes 200 ermittelt werden. Die für die einzelnen Komponenten 202 ermittelten Räume 201 können als Metadaten für die einzelnen Komponenten 202 in der Komponenten-Liste 311 gespeichert werden. So können Metadaten-abhängige Steuerbefehle für steuerbare Komponenten 202 in einem Gebäude 200 ermöglicht werden.

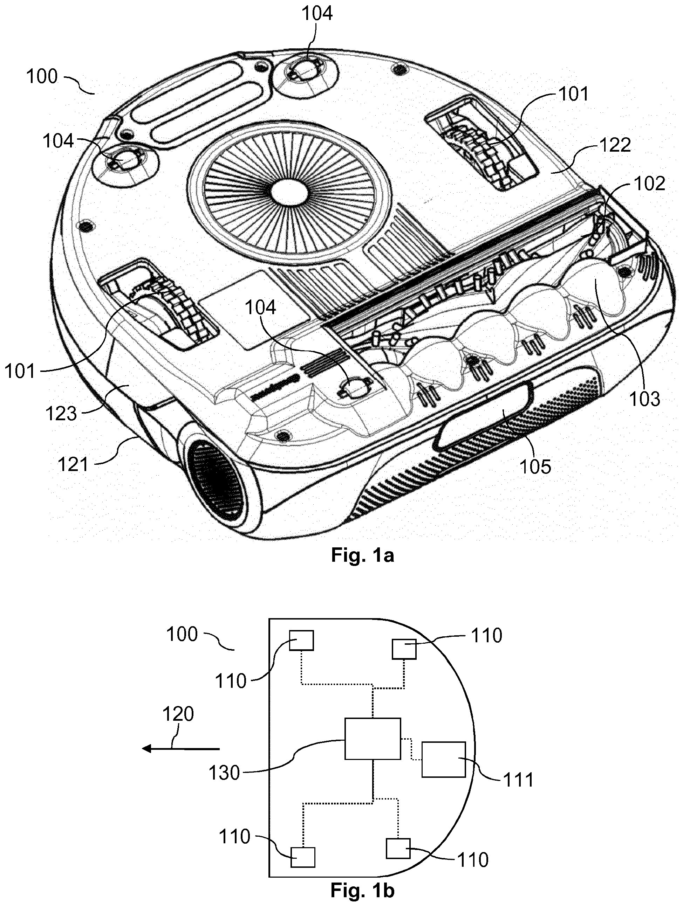

Zur Gebäudereinigung werden vermehrt Reinigungsroboter bzw. Saugroboter eingesetzt. Ein beispielhafter Reinigungsroboter 100 ist in den Figuren 1a und 1b dargestellt. Ein Reinigungsroboter 100 weist typischerweise ein oder mehrere Sensoren 110 auf, mit denen ein Umfeld des Reinigungsroboters 100 erfasst werden kann. Ein Reinigungsroboter 100 kann somit in besonders effizienter Weise als Sensoreinheit 100 des in Fig. 3 dargestellten Systems 300 zur Ermittlung von Metadaten für die steuerbaren Komponenten 202 in einem Gebäude 200 verwendet werden.

Fig. 1a zeigt die Unterseite 122 eines Reinigungsroboters 100, die im Reinigungs- bzw. Saugbetrieb des Reinigungsroboters 100 dem zu reinigenden Boden eines Reinigungsbereichs, etwa eines Raumes 201 eines Gebäudes 200, zugewandt ist. Die Unterseite 122 des Reinigungsroboters 100 weist typischerweise ein oder mehrere Antriebseinheiten 101 (mit ein oder mehreren Antriebsrädern) auf, durch die der Reinigungsroboter 100 bewegt werden kann, um unterschiedliche Bereiche eines Bodens zu reinigen. Des Weiteren kann der Reinigungsroboter 100 ein oder mehrere Führungselemente 104 (z.B. nicht angetriebene Räder) aufweisen, die eine stabile Bewegung des Reinigungsroboters 100 über dem zu reinigenden Boden ermöglichen. Außerdem umfasst ein Reinigungsroboter 100 typischerweise ein oder mehrere Reinigungseinheiten 102 (z.B. mit einer Reinigungsbürste), die eingerichtet sind, den Boden unter dem Reinigungsroboter 100 zu reinigen. Die ein oder mehreren Reinigungseinheiten 102 können durch ein oder mehrere tonnenförmige Abschirmungen 103 in Bewegungsrichtung 120 des Reinigungsroboters 100 abgeschirmt sein. Durch die ein oder mehreren Abschirmungen 103 können auf dem Boden liegende größere Gegenstände zur Seite geschoben werden, um zu vermeiden, dass größere Gegenstände in eine Reinigungseinheit 102 gelangen und die Reinigungseinheit 102 schädigen und/oder verstopfen. An der Oberseite 121 des Reinigungsroboters 100 kann eine Benutzerschnittstelle angeordnet sein, die es einem Nutzer des Reinigungsroboters 100 ermöglicht, Steuereingaben zu tätigen.

Außerdem kann der Reinigungsroboter 100 an einer Seitenwand 123 (z.B. an einer Seitenwand 123 im Frontbereich des Reinigungsroboters 100) einen Stoßsensor 105 umfassen, der eingerichtet ist, Sensordaten zu erfassen, die anzeigen, ob der Reinigungsroboter 100 in Bewegungsrichtung 120 gegen ein Hindernis gestoßen ist. Das Auslösen des Stoßsensors 105 durch ein Hindernis kann bewirken, dass sich der Reinigungsroboter 100 um seine, senkrecht auf dem Boden stehende, Vertikalachse dreht, und dadurch die Bewegungsrichtung 120 ändert, um dem Hindernis auszuweichen.

Der in Bewegungsrichtung 120 vorne liegende Frontbereich des Reinigungsroboters 100 kann eine im Wesentlichen geradlinige Kontur aufweisen (die z.B. 20% oder mehr des Umfangs des Reinigungsroboters 100 ausmacht). Die Verwendung einer geradlinigen Kontur ermöglicht die Bereitstellung einer relativ großen Reinigungseinheit 102 für eine zuverlässige Reinigung des Bodens eines Reinigungsbereichs.

Des Weiteren weist ein Reinigungsroboter 100 typischerweise ein oder mehrere Umfeldsensoren 110 auf, die eingerichtet sind, Umfelddaten in Bezug auf das Umfeld des Reinigungsroboters 100 zu erfassen (siehe Fig. 1b). Die ein oder mehreren Umfeldsensoren 110 können umfassen: eine oder mehrere Bildkameras, ein oder mehrere Ultraschallsensoren, ein oder mehrere taktile und/oder optische Abstandssensoren, ein oder mehrere akustische Sensoren, ein oder mehrere Temperatursensoren, etc. Ein Steuermodul 130 des Reinigungsroboters 100 kann eingerichtet sein, auf Basis der Umfelddaten digitale Karteninformation in Bezug auf den zu reinigenden Reinigungsbereich zu ermitteln und ggf. auf einer Speichereinheit 111 des Reinigungsroboters 100 zu speichern. Der Reinigungsroboter 100 kann die digitale Karteninformation nutzen, um sich innerhalb des Reinigungsbereichs (z.B. innerhalb eines Gebäudes 200) zu orientieren und/oder um eine Fahrroute zur Reinigung des Reinigungsbereichs festzulegen.

Die digitale Karteninformation für einen Reinigungsbereich (z.B. für ein Gebäude 200) kann permanent auf einer Speichereinheit 111 des Reinigungsroboters 100 gespeichert werden. Dies hat den Vorteil, dass die Karteninformation, die in einem ersten Reinigungsprozess erfasst wurde, in einem nachfolgenden Reinigungsprozess des gleichen Reinigungsbereiches wiederverwendet werden kann. So kann die Bewegung des Reinigungsroboters 100 und folglich die Reinigungsqualität bei dem nachfolgenden Reinigungsprozess verbessert werden. Beispielsweise kann die digitale Karteninformation die in Fig. 2 dargestellte Raumaufteilung eines Gebäudes 200 anzeigen. Die unterschiedlichen Räume 201 eines Gebäudes 200 und/oder die digitale Karteninformation können ggf. von dem Reinigungsroboter 100 bereitgestellt und von der Gebäude-spezifischen Steuereinheit 303 und/oder von der zentralen Steuereinheit 301 gespeichert werden (z.B. in einer Raum-Liste 312).

Ein Reinigungsroboter 100 kann somit in effizienter und komfortabler Weise als Sensoreinheit 100 zur automatischen Erfassung von Metadaten verwendet werden. Das Steuermodul 130 kann eingerichtet sein, über ein Kommunikationsmodul des Reinigungsroboters 100 (z.B. über eine WLAN oder Bluetooth Kommunikationsverbindung) mit einer Steuereinheit 301, 303 des Systems 300 zu kommunizieren. Beispielsweise kann das Steuermodul 130 der Steuereinheit 301, 303 anzeigen, dass sich der Reinigungsroboter 100 in einem ersten Raum 201 befindet. Die Steuereinheit 301, 303 kann dann sequentiell die ein oder mehreren steuerbaren Komponenten 202, für die noch kein Raum 201 ermittelt wurde, veranlassen, eine messbare Zustandsänderung auszuführen. Zeitlich synchron zu der Ausführung der Zustandsänderung einer Komponente 202 können Sensordaten durch die ein oder mehreren Sensoren 110 des Reinigungsroboters 100 erfasst werden. Es kann dann auf Basis der Sensordaten überprüft werden, ob sich die Komponente 202 in dem gleichen Raum 201 befindet wie der Reinigungsroboter 100.

Der Reinigungsroboter 100 kann veranlasst werden, in die unterschiedlichen Räume 201 des Gebäudes 200 zu fahren, und jeweils zu überprüfen, ob sich eine noch nicht zugeordnete Komponente 202 in dem jeweiligen Raum 201 befindet. So kann in automatischer Weise eine Zuordnung zwischen den Räumen 201 eines Gebäudes 200 und den steuerbaren Komponenten 202 in dem Gebäude 200 als Metadaten für die unterschiedlichen steuerbaren Komponenten 202 ermittelt werden. Es kann somit für jede einzelne Komponente 202 ermittelt und als Metadaten gespeichert werden, in welchem Raum 201 sich die Komponente 202 befindet.

Die Metadaten können dann zur Filterung der einzelnen Komponenten 202 verwendet werden. Beispielsweise kann auf Basis der Metadaten über das Steuergerät 304 abgefragt werden, welche steuerbaren Komponenten 202 sich in einem bestimmten Raum 201 befinden. Des Weiteren kann eine logisch zusammenhängende Darstellung der Komponenten 202 in einem Gebäude 200 bereitgestellt werden.

Es kann somit eine mobile Sensoreinheit 100, insbesondere ein Reinigungsroboter 100, bereitgestellt werden, der ein oder mehrere technische Einheiten bzw. Sensoren 110 zur Umwandlung von physikalischen Messgrößen in digitale Werte umfasst. Beispielhafte Sensoren 110 sind: eine optische Kamera, die Bewegt- und/oder Stillbilder erfasst; ein Abstandssensor (z.B. ein akustischer, optischer und/oder Time-of-Flight Sensor); ein mechanischer Schalter; ein Umweltsensor (z.B. zur Messung von Temperatur, Luftfeuchte, Lichtstärke, etc.); ein Beschleunigungs-, Drehraten- und/oder Magnetsensoren (etwa eine Inertial Measurement Unit, IMU); und/oder eine Odometriefunktion des Fahrwerks eines Roboters.

Zur Ermittlung von Metadaten kann ein Zusammenspiel zwischen der Smart Home Steuerzentrale 303, der mobilen Sensoreinheit 100 und/oder einem Großrechensystem 301 (d.h. der zentralen Steuereinheit) erfolgen. Zu Beginn des automatisierten Metadaten-Ermittlungsprozesses können die Komponenten 202 in einem Gebäude 200 in einen definierten Grundzustand versetzt werden. Beispielsweise können alle Komponenten 202 in einen deaktivierten Zustand versetzt werden (z.B. Lampen aus, Rollläden hoch, Heizung aus, etc.).

Die mobile Sensoreinheit 100 wird dann in einen bestimmten Raum 201 kommandiert werden, z.B. in den ersten Raum aus einer vorhandenen Raum-Liste 312. Die Sensoreinheit 100 wird ferner angewiesen, die ein oder mehreren Sensoren 110 der Sensoreinheit 100 (z.B. eine Videokamera) zu aktivieren. Die Sensordaten der ein oder mehreren Sensoren 110 können über ein Kommunikationsnetzwerk 302 an die Gebäude-spezifische Steuereinheit 303 und/oder an die zentrale Steuereinheit 301 übertragen werden (z.B. über eine TCP/IP Verbindung).

Für jeden Raum 201 der Raum-Liste 312 kann wie folgt vorgegangen werden:
- Die Gebäude-spezifische Steuereinheit 303 veranlasst eine Komponente 202 aus der Komponenten-Liste 311 eine Zustandsänderung durchzuführen, wobei die Zustandsänderung bevorzugt einen möglichst großen Abstand bzw. Unterschied zu dem Grundzustand der Komponente 202 aufweist. Beispielsweise kann eine Lampe veranlasst werden, mit maximaler Lichtstärke zu strahlen; ein TV-Gerät kann veranlasst werden, ein bestimmtes Testmuster darzustellen; Rollläden bzw. eine Jalousie kann veranlasst werden, sich zu schließen, etc.
- Die Gebäude-spezifische Steuereinheit 303 kann die Zustandsänderung an die zentrale Steuereinheit 301 melden. Dabei kann optional ein eineindeutig identifizierbarer Identifikator (ID) für die Komponente 202 mit der Zustandsänderung kommuniziert werden. Alternativ oder ergänzend kann der Typ der geschalteten, steuerbaren Komponente 202 kommuniziert werden.
- Die zentrale Steuereinheit 301 kann, ggf. nach einer geeigneten Zeitspanne, auf Basis der von der Sensoreinheit 100 übermittelten Sensordaten überprüfen, ob die Zustandsänderung detektiert werden kann (z.B. ob eine Aufhellung des Raumes 201 erfolgt ist; ob ein Fenster verschattet ist; ob eine Temperaturänderung erfolgt ist; etc.). Wenn auf Basis der Sensordaten eine Zustandsänderung detektiert werden kann, so kann daraus abgeleitet werden, dass sich die gerade geschaltete, steuerbare Komponente 202 innerhalb des aktuell befahrenen Raumes 201 der Sensoreinheit 100 befindet.
- Die zentrale Steuereinheit 301 kann der Gebäude-spezifischen Steuereinheit 303 mitteilen, dass erkannt wurde, dass sich die steuerbare Komponente 202 in dem gleichen Raum 201 befindet wie die Sensoreinheit 100. Es kann dann eine Zuordnung zwischen Raum 201 und Komponente 202 als Metadaten gespeichert werden. Ggf. können weitere Metadaten gespeichert werden, die auf Basis der Sensordaten ermittelt werden können (z.B. mittels Bilderkennung bzw. Bildanalyse). Insbesondere kann die Position der Komponente 202 innerhalb eines Raumes 201 präzisiert werden (wie z.B. ein Möbelstück auf oder in dem sich die Komponente 202 befindet). Alternativ oder ergänzend kann eine technische bzw. Funktionseigenschaft der Komponente 202 ermittelt und als Metadaten gespeichert werden (wie z.B. es handelt sich um eine dimmbare Lampe, Farbe der Lampe, etc.).
- Der o.g. Prozess kann für alle bekannten Komponenten 202 der Komponenten-Liste 311 und für jeden Raum 201 der Raum-Liste 312 durchgeführt werden. Dabei können Komponenten 202, für die der Raum 201 bereits ermittelt wurde, aus dem Prozess herausgenommen werden, um den Zeitaufwand für die Ermittlung von Metadaten zu reduzieren.

Zum Schutz der Privatsphäre der Nutzer kann die Zuordnung lokal in der Gebäude-spezifischen Steuereinheit 303 (z.B. in einer Smart-Home Zentrale) durchgeführt und gespeichert werden. Die zentrale Steuereinheit 301 kann ggf. nur die Auswertung der Sensordaten der (mobilen) Sensoreinheit 100 durchführen (um die Metadaten zu ermitteln). Die Auswertung der Sensordaten durch eine zentrale Steuereinheit 301 kann vorteilhaft sein, um ausreichend hohe Rechenkapazität bereitzustellen, und um so die Güte der ermittelten Metadaten zu erhöhen. Ggf. können, um die Komplexität der Gebäude-spezifischen Steuereinheit 303 zu reduzieren und um die Betriebssicherheit zu erhöhen, die beschriebenen Funktionen vollständig auf der zentralen Steuereinheit 301 implementiert werden.

Die erzeugte Metainformation kann einem Nutzer auf geeignete Weise zur Verfügung gestellt werden, etwa durch Anzeige auf einem mobilen Endgerät 304 und/oder durch Verfügbarmachen in einer sprachbasierten Benutzerschnittstelle (z.B. zur Steuerung einer steuerbaren Komponente 202).

Wie bereits oben dargelegt, kann zur Beschleunigung des beschriebenen Verfahrens bei einer angenommenen, eineindeutigen physischen Zuordnung zwischen Räumen 201 und Komponenten 202 berücksichtigt werden, welche ein oder mehreren Komponenten 202 bereits einem Raum 201 zugeordnet wurden. Mit steigender Anzahl abgefahrener Räume 201 und zugeordneter Komponenten 202 kann dann die Anzahl der noch zu testenden Komponenten 202 reduziert werden.

Wenn in einem Raum 201 mehrere Positionen bzw. Teilbereiche für eine bestimmte Komponente 202 in Frage kommen, so kann die mobile Sensoreinheit 100 veranlasst werden, sich zu drehen, um sequentiell die unterschiedlichen Positionen bzw. Teilbereiche in einem Raum 201 zu überprüfen. Beispielsweise können unterschiedliche Fenster eines Raums 201 dahingehend überprüft werden, ob sich die Komponente 202, die eine Zustandsänderung durchgeführt hat oder durchführt, an dem jeweiligen Fenster befindet. So kann die Güte der ermittelten Metadaten weiter erhöht werden.

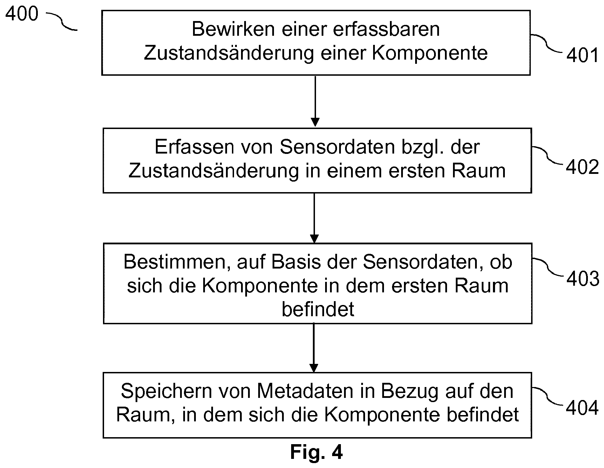

Fig. 4 zeigt ein Ablaufdiagramm eines beispielhaften Verfahrens 400 zur Ermittlung von Metadaten für eine steuerbare Komponente 202 in einem Gebäude 200 mit einer Mehrzahl von unterschiedlichen Räumen 201. Das Verfahren 400 kann z.B. durch das in Fig. 3 dargestellte System 300 und/oder durch eine Steuereinheit 301, 303 ausgeführt werden. Die steuerbare Komponente 202 kann eine Smart-Home Komponente und/oder ein Hausgerät umfassen. Das Gebäude 200 kann eine Wohnung oder ein Haus sein.

Das Verfahren 400 umfasst das Bewirken 401 einer messbaren Zustandsänderung der steuerbaren Komponente 202. Zu diesem Zweck kann eine Anweisung von einer Steuereinheit 301, 303 des Systems 300 an die steuerbare Komponente 202 gesendet werden. Außerdem umfasst das Verfahren 400 das Erfassen 402 von Sensordaten in einem ersten Raum 201 des Gebäudes 200. Zu diesem Zweck kann eine (mobile) Sensoreinheit 100 von der Steuereinheit 301, 303 veranlasst werden, die Sensordaten mittels zumindest eines Umfeldsensors 110 der Sensoreinheit 100 zu erfassen. Dabei können das Erfassen 402 der Sensordaten und das Bewirken 401 der Zustandsänderung zeitlich synchronisiert erfolgen, so dass die Zustandsänderung auf Basis der Sensordaten detektiert werden kann, wenn sich die steuerbare Komponente 202 in dem ersten Raum 201 befindet.

Ferner umfasst das Verfahren 400 das Bestimmen 403 auf Basis der Sensordaten, ob sich die steuerbare Komponente 202 in dem ersten Raum 201 befindet oder nicht. Insbesondere kann überprüft werden, ob die Sensordaten die Zustandsänderung anzeigen oder nicht. Wenn die Sensordaten die Zustandsänderung anzeigen, so kann bestimmt werden, dass sich die steuerbare Komponente 202 in dem ersten Raum 201 befindet. Andererseits kann bestimmt werden, dass sich die steuerbare Komponente 202 nicht in dem ersten Raum 201 befindet.

Außerdem umfasst das Verfahren 400 das Speichern 404 von Metadaten für die steuerbare Komponente 202, die anzeigen, dass sich die steuerbare Komponente 202 in dem ersten Raum 201 befindet, wenn auf Basis der Sensordaten bestimmt 403 wurde, dass sich die steuerbare Komponente 202 in dem ersten Raum 201 befindet. Die Metadaten können in einer Speichereinheit der Steuereinheit 301, 303 gespeichert werden.

Durch die in diesem Dokument beschriebenen Maßnahmen können der Zeitaufwand zur Ermittlung von Metadaten für steuerbare Komponenten 202 in einem Gebäude 200 reduziert und die Güte der ermittelten Metadaten erhöht werden. Die ermittelten Metadaten können dann für eine komplexe und komfortable Steuerung der Komponenten 202 verwendet werden.

Die vorliegende Erfindung ist nicht auf die gezeigten Ausführungsbeispiele beschränkt. Insbesondere ist zu beachten, dass die Beschreibung und die Figuren nur das Prinzip des vorgeschlagenen Systems bzw. des vorgeschlagenen Verfahrens veranschaulichen sollen.

## Patentansprüche

1. Verfahren (400) zur Ermittlung von Metadaten für eine steuerbare Komponente (202) in einem Gebäude (200) mit einer Mehrzahl von unterschiedlichen Räumen (201); wobei das Verfahren (400) umfasst,
- Veranlassen, dass eine mobile Sensoreinheit (100) in einen ersten Raum (201) bewegt wird;
- Bewirken (401) einer messbaren Zustandsänderung der steuerbaren Komponente (202);
- Erfassen (402) von Sensordaten mittels der mobilen Sensoreinheit (100) im ersten Raum (201) des Gebäudes (200);
- Bestimmen (403) auf Basis der Sensordaten, ob sich die steuerbare Komponente (202) in dem ersten Raum (201) befindet oder nicht; und
- wenn auf Basis der Sensordaten bestimmt (403) wurde, dass sich die steuerbare Komponente (202) in dem ersten Raum (201) befindet: Speichern (404) von Metadaten für die steuerbare Komponente (202), die anzeigen, dass sich die steuerbare Komponente (202) in dem ersten Raum (201) befindet;
- wenn bestimmt wurde, dass sich die steuerbare Komponente (202) nicht in dem ersten Raum (201) befindet: sequentielles Erfassen von Sensordaten in mehreren unterschiedlichen Räumen (201) der Mehrzahl von Räumen (201) und Bestimmen auf Basis der Sensordaten aus den unterschiedlichen Räumen (201), in welchem Raum (201) der Mehrzahl von Räumen (201) des Gebäudes (200) sich die steuerbare Komponente (202) befindet.

2. Verfahren (400) gemäß Anspruch 1, wobei die mobile Sensoreinheit (100) ein Reinigungsroboter ist, der eingerichtet ist, einen Boden eines Raumes (201) des Gebäudes (200) zu reinigen.

3. Verfahren (400) gemäß einem der vorhergehenden Ansprüche, wobei die Sensordaten umfassen,
- Sensordaten zumindest eines optischen Sensors (110), insbesondere zumindest einer Bildkamera;
- Sensordaten zumindest eines akustischen Sensors (110);
- Sensordaten zumindest eines Ultraschallsensors (110);
- Sensordaten zumindest eines Klimasensors, insbesondere eines Temperatursensors und/oder eines Luftfeuchtigkeitssensors; und/oder
- Sensordaten zumindest eines Inertialsensors (110).

4. Verfahren (400) gemäß einem der vorhergehenden Ansprüche, wobei die Zustandsänderung der Komponente (202) umfasst,
- eine Änderung von einem Grundzustand zu einem geänderten Zustand;
- eine Änderung von einem inaktiven Zustand in einen aktiven Zustand, oder umgekehrt;
- eine Änderung einer Intensität, mit der die Komponente (202) betrieben wird;
- eine Änderung von einem geöffneten Zustand in einen geschlossenen Zustand, oder umgekehrt; und/oder
- eine Ausgabe eines definierten Testmusters durch die Komponente (202).

5. Verfahren (400) gemäß Anspruch 4, wobei
- die Komponente (202) eingerichtet ist, Licht zu emittieren; und
- die Zustandsänderung eine Änderung einer Eigenschaft, insbesondere der Intensität und/oder der Farbe, des emittierten Lichts umfasst; und/oder
- die Komponente (202) eingerichtet ist, ein Fenster eines Raumes (201) zu bedecken; und
- die Zustandsänderung eine Änderung eines Abdeckungsgrades des Fensters umfasst; und/oder
- die Komponente (202) eingerichtet ist, ein Audio- und/oder Videosignal auszugeben; und
- die Zustandsänderung die Ausgabe eines vordefinierten Audio- und/oder Videosignals umfasst.

6. Verfahren (400) gemäß einem der vorhergehenden Ansprüche, wobei
- in dem Gebäude (200) mehrere unterschiedliche steuerbare Komponenten (202) angeordnet sind; und
- das Verfahren (400) umfasst, iteratives Wiederholen für die unterschiedlichen steuerbaren Komponenten (202), des Bewirkens (401) einer Zustandsänderung der jeweiligen Komponente (202), des Erfassens (402) von Sensordaten, und des Bestimmens (403), ob sich die jeweilige Komponente (202) in dem ersten Raum (201) befindet, um zu ermitteln, welche null, ein oder mehreren Komponenten (202) der unterschiedlichen Komponenten (202) sich in dem ersten Raum (201) befinden.

7. Verfahren (400) gemäß einem der vorhergehenden Ansprüche, wobei das Verfahren (400) umfasst,
- Erfassen von Sensordaten in unterschiedlichen Teilbereichen des ersten Raumes (201);
- Bestimmen, auf Basis der Sensordaten, in welchem Teilbereich des ersten Raumes (201) sich die Komponente (202) befindet; und
- Speichern von Metadaten für die steuerbare Komponente (202), die anzeigen, in welchem Teilbereich des ersten Raumes (201) sich die Komponente (202) befindet.

8. Verfahren (400) gemäß einem der vorhergehenden Ansprüche, wobei das Verfahren (400) umfasst,
- Erfassen von Sensordaten in Bezug auf eine Funktionseigenschaft der Komponente; und
- Speichern von Metadaten für die steuerbare Komponente (202), die anzeigen, welche Funktionseigenschaft die Komponente (202) aufweist.

9. Verfahren (400) gemäß einem der vorhergehenden Ansprüche, wobei das Verfahren (400) umfasst,
- Erfassen von Sensordaten in allen Räumen (201) des Gebäudes (200), die in einer Raum-Liste (312) aufgelistet sind;
- Bewirken von Zustandsänderungen von allen Komponenten (202), die in einer Komponenten-Liste (311) aufgeführt sind; und
- Ermitteln, auf Basis der Sensordaten, einer Zuordnung von allen Komponenten (202) der Komponenten-Liste (311) zu jeweils genau einem Raum (201) der Raum-Liste (312).

10. Verfahren (400) gemäß einem der vorhergehenden Ansprüche, wobei das Bewirken (401) einer messbaren Zustandsänderung der Komponente (202) und das Erfassen (402) von Sensordaten zeitlich synchronisiert erfolgt, so dass aus einer auf Basis der Sensordaten detektierten Zustandsänderung geschlossen werden kann, dass die detektierte Zustandsänderung auf die messbare Zustandsänderung der steuerbaren Komponente (202) zurückzuführen ist.

11. Verfahren (400) gemäß einem der vorhergehenden Ansprüche, wobei
- die steuerbare Komponente (202) eine Smart Home Komponente und/oder ein Hausgerät umfasst; und/oder
- das Gebäude (200) eine Wohnung und/oder ein Haus umfasst.

12. Steuereinheit (301, 303) zur Ermittlung von Metadaten für eine steuerbare Komponente (202) in einem Gebäude (200) mit einer Mehrzahl von unterschiedlichen Räumen (201); wobei die Steuereinheit (301, 303) eingerichtet ist,
- zu veranlassen, dass eine mobile Sensoreinheit (100) in einen ersten Raum (201) bewegt wird;
- die steuerbare Komponente (202) zu veranlassen, eine messbare Zustandsänderung zu bewirken;
- die mobile Sensoreinheit (100) zu veranlassen, Sensordaten in dem ersten Raum (201) des Gebäudes (200) zu erfassen;
- auf Basis der Sensordaten zu bestimmen, ob sich die steuerbare Komponente (202) in dem ersten Raum (201) befindet oder nicht; und
- wenn auf Basis der Sensordaten bestimmt (403) wurde, dass sich die steuerbare Komponente (202) in dem ersten Raum (201) befindet, Metadaten für die steuerbare Komponente (202) zu speichern, die anzeigen, dass sich die steuerbare Komponente (202) in dem ersten Raum (201) befindet; und,
wenn bestimmt wurde, dass sich die steuerbare Komponente (202) nicht in dem ersten Raum (201) befindet, Sensordaten in mehreren unterschiedlichen Räumen (201) der Mehrzahl von Räumen (201) sequentiell zu erfassen und auf Basis der Sensordaten aus den unterschiedlichen Räumen (201) zu bestimmen, in welchem Raum (201) der Mehrzahl von Räumen (201) des Gebäudes (200) sich die steuerbare Komponente (202) befindet.

## Claims

1. Method (400) for ascertaining metadata for a controllable component (202) in a building (200) with a plurality of different rooms (201); wherein the method (400) comprises
- prompting a mobile sensor unit (100) to be moved in a first room (201);
- causing (401) a measurable state change of the controllable component (202);
- capturing (402) sensor data by means of the mobile sensor unit (100) in the first room (201) of the building (200);
- determining (403), on the basis of the sensor data, whether or not the controllable component (202) is located in the first room (201); and
- if it was determined (403) on the basis of the sensor data that the controllable component (202) is located in the first room (201): storing (404) metadata for the controllable component (202), which shows that the controllable component (202) is located in the first room (201);
- if it was determined that the controllable component (202) is not located in the first room (201): sequentially capturing sensor data in multiple different rooms (201) of the plurality of rooms (201) and determining, on the basis of the sensor data from the different rooms (201), the room (201) of the plurality of rooms (201) of the building (200) in which the controllable component (202) is located.

2. Method (400) according to claim 1, wherein the mobile sensor unit (100) is a cleaning robot, which is configured to clean a floor of a room (201) of the building (200).

3. Method (400) according to one of the preceding claims, wherein the sensor data comprises
- sensor data of at least one optical sensor (110), in particular at least one image camera;
- sensor data of at least one acoustic sensor (110);
- sensor data of at least one ultrasonic sensor (110);
- sensor data of at least one climate sensor, in particular a temperature sensor and/or a humidity sensor; and/or
- sensor data of at least one inertial sensor (110).

4. Method (400) according to one of the preceding claims, wherein the state change of the component (202) comprises
- a change from a base state to a changed state;
- a change from an inactive state to an active state, or vice versa;
- a change of an intensity with which the component (202) is operated;
- a change from an opened state to a closed state, or vice versa; and/or
- an output of a defined test pattern by the component (202).

5. Method (400) according to claim 4, wherein
- the component (202) is configured to emit light; and
- the state change comprises a change in a property, in particular the intensity and/or the colour, of the emitted light; and/or
- the component (202) is configured to cover a window of a room (201); and
- the state change comprises a change in a degree of coverage of the window; and/or
- the component (202) is configured to output an audio and/or video signal; and
- the state change comprises the output of a predefined audio and/or video signal.

6. Method (400) according to one of the preceding claims, wherein
- multiple different controllable components (202) are arranged in the building (200); and
- the method comprises (400) iteratively repeating, for the different controllable components (202), the causing (401) of a state change of the respective component (202), the capturing (402) of sensor data, and the determining (403) of whether the respective component (202) is located in the first room (201), in order to ascertain which zero, one or more components (202) of the different components (202) is located in the first room (201).

7. Method (400) according to one of the preceding claims, wherein the method (400) comprises
- capturing sensor data in different subregions of the first room (201);
- determining, on the basis of the sensor data, the subregion of the first room (201) in which the component (202) is located; and
- storing metadata for the controllable component (202) which shows the subregion of the first room (201) in which the component (202) is located.

8. Method (400) according to one of the preceding claims, wherein the method (400) comprises
- capturing sensor data in relation to a functional property of the component; and
- storing metadata for the controllable component (202) which shows which functional property the component (202) has.

9. Method (400) according to one of the preceding claims, wherein the method (400) comprises
- capturing sensor data in all rooms (201) of the building (200) that are listed in a room list (312);
- causing state changes of all components (202) that are specified in a component list (311); and
- ascertaining, on the basis of the sensor data, an assignment of all components (202) of the component list (311) to precisely one room (201) of the room list (312) in each case.

10. Method (400) according to one of the preceding claims, wherein the causing (401) of a measurable state change of the component (202) and the capturing (402) of sensor data takes place in a temporally synchronised manner, meaning that it is possible to infer, from a state change detected on the basis of the sensor data, that the detected state change can be attributed to the measurable state change of the controllable component (202).

11. Method (400) according to one of the preceding claims, wherein
- the controllable component (202) comprises a smart home component and/or a household appliance; and/or
- the building (200) comprises a place of residence and/or a house.

12. Control unit (301, 303) for ascertaining metadata for a controllable component (202) in a building (200) with a plurality of different rooms (201); wherein the control unit (301, 303) is configured
- to prompt a mobile sensor unit (100) to be moved in a first room (201);
- to prompt the controllable component (202) to cause a measurable state change;
- to prompt the mobile sensor unit (100) to capture sensor data in the first room (201) of the building (200);
- to determine, on the basis of the sensor data, whether or not the controllable component (202) is located in the first room (201); and
- if it was determined (403) on the basis of the sensor data that the controllable component (202) is located in the first room (201), to store metadata for the controllable component (202), which shows that the controllable component (202) is located in the first room (201); and
if it was determined that the controllable component (202) is not located in the first room (201), to sequentially capture sensor data in multiple different rooms (201) of the plurality of rooms (201) and to determine, on the basis of the sensor data from the different rooms (201), the room (201) of the plurality of rooms (201) of the building (200) in which the controllable component (202) is located.

## Revendications

1. Procédé (400) de détermination de métadonnées pour un composant (202) commandable dans un bâtiment (200) comprenant une pluralité de pièces (201) différentes, le procédé (400) comprenant :
- le fait d'engendrer un déplacement d'une unité de capteur (100) mobile dans une première pièce (201),
- l'engendrement (401) d'une modification d'état mesurable du composant commandable (202),
- le recueil (402) de données de détection au moyen de l'unité de capteur mobile (100) dans la première pièce (201) du bâtiment (200),
- la détermination (403), sur la base des données de détection, si le composant commandable (202) se trouve ou non dans la première pièce (201), et
- s'il a été déterminé (403), sur la base des données de détection, que le composant commandable (202) se trouve dans la première pièce (201) : enregistrement (404) de métadonnées pour le composant commandable (202) qui indiquent que le composant commandable (202) se trouve dans la première pièce (201),
- s'il a été déterminé que le composant commandable (202) ne se trouve pas dans la première pièce (201) : recueil séquentiel de données de détection dans plusieurs pièces différentes (201) de la pluralité des pièces (201) et détermination, sur la base des données de détection provenant des différentes pièces (201), dans quelle pièce (201) de la pluralité des pièces (201) du bâtiment (200) le composant commandable (202) se trouve.

2. Procédé (400) selon la revendication 1, dans lequel l'unité de capteur mobile (100) est un robot de nettoyage, qui est configuré pour nettoyer un sol d'une pièce (201) du bâtiment (200).

3. Procédé (400) selon l'une des revendications précédentes, dans lequel les données de détection comprennent :
- des données de détection d'au moins un capteur optique (110), en particulier d'au moins une caméra,
- des données de détection d'au moins un capteur acoustique (110),
- des données de détection d'au moins un capteur à ultrasons (110),
- des données de détection d'au moins un capteur climatique en particulier d'au moins un capteur de température et/ou d'un capteur d'humidité de l'air, et/ou
- des données de détection d'au moins un capteur inertiel (110).

4. Procédé (400) selon l'une des revendications précédentes, dans lequel la modification d'état du composant (202) comprend :
- un changement d'un état fondamental à un état modifié,
- un changement d'un état inactif à un état actif ou inversement,
- un changement d'intensité, avec laquelle le composant (202) est commandé,
- un changement d'un état ouvert à un état fermé ou inversement, et/ou
- une émission d'une configuration d'essai définie par le composant (202).

5. Procédé (400) selon la revendication 4, dans lequel
- le composant (202) est configuré pour émettre de la lumière, et
- la modification d'état comprend une modification d'une propriété, en particulier de l'intensité et/ou de la couleur de la lumière émise, et/ou
- le composant (202) est configuré pour recouvrir une fenêtre d'une pièce (201), et
- la modification d'état comprend une modification d'un taux de couverture de la fenêtre, et/ou
- le composant (202) est configuré pour émettre un signal audio et/ou vidéo, et
- la modification d'état comprend l'émission d'un signal audio et/ou vidéo prédéfini.

6. Procédé (400) selon l'une des revendications précédentes, dans lequel
- plusieurs composants commandables (202) différents sont disposés dans le bâtiment (200), et
- le procédé (400) comprend une répétition itérative, pour les différents composants commandables (202), de l'engendrement (401) d'une modification d'état du composant respectif (202), du recueil (402) des données de détection, et de la détermination (403) si le composant respectif (202) se trouve dans la première pièce (201), afin de déterminer si, oui ou non, un ou plusieurs composants (202) des différents composants (202) se trouvent dans la première pièce (201).

7. Procédé (400) selon l'une des revendications précédentes, dans lequel le procédé (400) comprend :
- le recueil de données de détection dans différentes régions partielles de la première pièce (201),
- la détermination, sur la base des données de détection, dans quelle région partielle de la première pièce (201) le composant (202) se trouve, et
- l'enregistrement de métadonnées pour le composant commandable (202) qui indiquent dans quelle région partielle de la première pièce (201) le composant (202) se trouve.

8. Procédé (400) selon l'une des revendications précédentes, dans lequel le procédé (400) comprend :
- le recueil de données de détection concernant une caractéristique fonctionnelle du composant, et
- le stockage de métadonnées pour le composant commandable (202), qui indiquent la caractéristique fonctionnelle que le composant (202) possède.

9. Procédé (400) selon l'une des revendications précédentes, dans lequel le procédé (400) comprend :
- le recueil de données de détection dans toutes les pièces (201) du bâtiment (200), qui sont répertoriées dans une liste de pièces (312),
- l'engendrement de changements d'état de tous les composants (202), qui sont mentionnés dans une liste des composants (311),
- la détermination, sur la base des données de détection, d'une affectation respective de tous les composants (202) de la liste des composants (311) exactement à une pièce (201) de la liste des pièces (312).

10. Procédé (400) selon l'une des revendications précédentes, dans lequel :
l'engendrement (401) d'une modification d'état mesurable du composant (202) et le recueil (402) de données de détection s'effectuent de manière synchronisée dans le temps, de manière à ce qu'à partir d'une modification d'état détectée sur la base des données de détection, il puisse être conclu que la modification d'état détectée est imputable à la modification d'état mesurable du composant commandable (202).

11. Procédé (400) selon l'une des revendications précédentes, dans lequel
- le composant commandable (202) comprend un composant d'habitat intelligent et/ou un appareil électroménager, et/ou
- le bâtiment (200) comprend un appartement et/ou une maison.

12. Unité de commande (301, 303) pour déterminer des métadonnées pour un composant commandable (202) dans un bâtiment (200) comprenant une pluralité de pièces (201) différentes, l'unité de commande (301, 303) étant configurée pour :
- engendrer un déplacement d'une unité de capteur (100) mobile dans une première pièce (201),
- amener le composant commandable (202) à opérer une modification d'état mesurable (202),
- amener l'unité de capteur mobile (100) à recueillir des données de détection dans la première pièce (201) du bâtiment (200),
- déterminer, sur la base des données de détection, si le composant commandable (202) se trouve ou non dans la première pièce (201), et
- s'il a été déterminé (403), sur la base des données de détection, que le composant commandable (202) se trouve dans la première pièce (201), enregistrer des métadonnées pour le composant commandable (202) qui indiquent que le composant commandable (202) se trouve dans la première pièce (201), et
- s'il a été déterminé que le composant commandable (202) ne se trouve pas dans la première pièce (201), recueillir de façon séquentielle des données de détection dans plusieurs pièces différentes (201) de la pluralité des pièces (201), et déterminer, sur la base des données de détection provenant des différentes pièces (201), dans quelle pièce (201) de la pluralité des pièces (201) du bâtiment (200) le composant commandable (202) se trouve.
